# EUROPEAN PATENT APPLICATION

(11) **EP 0 755 762 A1**
(43) Date of publication of application: **29.01.1997**
(21) Application number: 96902440.5
(22) Date of filing: 13.02.1996
(51) Int. Cl.: B29C 43/02, B29C 43/32, B29C 43/36, B29C 43/52, B29C 70/06

(54) **MOLDED ARTICLE OF FIBER-REINFORCED RESINS AND PROCESS AND EQUIPMENT FOR THE MOLDING THEREOF**

(30) Priority: 14.02.1995 JP 25735/95; 09.02.1996 JP 24277/96
(71) Applicant: KABUSHIKI KAISHA KOBE SEIKO SHO, Kobe-Shi, Hyogo 651 (JP)
(72) Inventor: OKUMURA, Toshiaki, Kobe Corp. Res. Lab. in Kobe, Nishi-ku, Kobe-shi, Hyogo 651-22 (JP); SAITO, Kaizaburo, Kobe Corp. Res. Lab. in Kobe, Nishi-ku, Kobe-shi, Hyogo 651-22 (JP); EKIMOTO, Takao, Kobe Corp. Res. Lab. in Kobe, Nishi-ku, Kobe-shi, Hyogo 651-22 (JP); KADOWAKI, Ryosaku, Kobe Corp. Res. Lab. in Kobe, Nishi-ku, Kobe-shi, Hyogo 651-22 (JP); YUMITORI, Shuji, Kobe Corp. Res. Lab. in Kobe, Nishi-ku, Kobe-shi, Hyogo 651-22 (JP)
(74) Representative: Lewin, John Harvey
(86) International application number: JP9600322
(87) International publication number: WO9625280

(57) **Abstract**

A light composite material structure having good sound-absorbing performance and recyclability, and enabling easy production of a sound-absorbing portion without using different material. This invention features preparing a molding compound by air-mixing a thermoplastic resin and reinforcing fibers, for instance, to create three-dimensionally interlacing of the reinforcing fibers, plasticizing and compression-molding the molding compound, in which a sound-absorbing portion is formed as the reinforcing fibers are fluffed out in a specific surface region of the molded resin product and/or a void is partially created in the molded resin product due to restoring expansion of the compressed reinforcing fibers.

## Description

### TECHNICAL FIELD

The present invention relates to structures constructed with composite materials featuring sound absorbing performance and lightweight properties. More particularly, the invention is concerned with fiber-reinforced molded resin products suitable for use as engine sound absorbing parts, for instance, such as under shields of automobiles which require sound absorbing qualities as well as with molding methods and molding apparatus for producing such fiber-reinforced molded resin products.

### BACKGROUND ART

Fiber-reinforced thermoplastic composite resin materials have attained widespread applications in recent years. This is mainly because they have such advantages as low prices, corrosion resistance, mechanical strength and ease of materials recycling. A typical example of such composite materials is a polypropylene composite reinforced with glass fibers.

Potential applications envisaged in the automotive industry are an under shield attached to the bottom of a car body, engine top and side covers attached around an engine, for instance. Conventionally provided for the purpose of engine sound insulating, this kind of acoustic insulators typically comprises a metallic component like a steel plate on which a sound-absorbing glass wool mat covered with aluminum foil is bonded with an adhesive. Efforts are being made at present to replace these acoustic insulating materials with glass fiber-reinforced polypropylene composites.

Although the aforementioned composite materials are inexpensive, non-corrosive and easily recyclable, they do not have sound absorbing qualities in themselves. It has therefore been necessary to attach a glass wool mat covered with aluminum foil, or sound absorbing materials to the composite materials as was required in the conventional acoustic insulating materials.

It would be appreciated that the previously known construction has the following drawbacks:
a) It requires a lot of work to attach glass wool mats to base plates made from a fiber-reinforced thermoplastic composite resin material by using an adhesive, and this is likely to result in an increase in production costs and deterioration of production efficiency;
b) Glass fibers released and floated in the air during a glass wool mat bonding process leads to pollution of working environment as they can attach to a worker's skin or invade the worker's body through his or her respiratory system; and
c) The aluminum foil, glass wool mats and base plates for recycling purposes, it is essential to separate them from one another, and this would make it impossible to take full advantage of the inherent recycling capability of the fiber-reinforced thermoplastic composite resin material.

The present invention has been made to overcome the aforementioned problems of the conventional acoustic insulating materials. It is therefore an object of the invention to provide fiber-reinforced molded resin products which can easily be produced from a single molding compound and offer recyclability and excellent sound absorbing properties. It is another object of the invention to provide molding methods and molding apparatus for producing such fiber-reinforced molded resin products.

### DISCCLOSURE OF THE INVENTION

The invention of claim 1 is directed to a fiber-reinforced molded resin product produced by plasticizing and compression-molding a mixture of a thermoplastic resin and reinforcing fibers has a sound-absorbing portion formed by causing restoring expansion of the compressed reinforcing fibers in a specific surface region of the molded resin product to fluff out the reinforcing fibers in that surface region. It is preferable that the fiber-reinforced molded resin product thus produced has a partially fluffed surface on one side and an unfluffed solid skin on the other side. Alternatively, the present invention includes a product partially having a void.

The invention of claim 4 is directed to a fiber-reinforced molded resin product produced by plasticizing and compression-molding a mixture of a thermoplastic resin and reinforcing fibers has a solid skin formed on each surface by once melting and then solidifying the thermoplastic resin containing the reinforcing fibers and a sound-absorbing portion formed by causing restoring expansion of the compressed reinforcing fibers in a specific surface region of the molded resin product to partially create a void in the molded resin product.

The invention of claim 5 is directed to a method of producing a fiber-reinforced molded resin product comprises the steps of plasticizing a mixture of a thermoplastic resin and reinforcing fibers, feeding a resultant plasticized compound into a metal mold, and compression-molding the plasticized compound in the metal mold, wherein the compression pressure in a desired surface region of the molded resin product is released during the compression molding operation so that a sound-absorbing portion is formed in that surface region as the reinforcing fibers are fluffed out and/or a void is partially created in the molded resin product. The molding method according to claim 5 is referred to as a first molding method.

The invention of claim 6 is directed to a method of producing a fiber-reinforced molded resin product comprises the steps of plasticizing a mixture of a thermoplastic resin and reinforcing fibers, feeding a resultant plasticized compound into a metal mold having a recessed part at a location corresponding to a portion of the plasticized compound where restoring expansion of the compressed reinforcing fibers is to be caused, and compression-molding the plasticized compound in the metal mold, wherein part of the plasticized compound flows into the recessed part during the compression molding operation, resulting in an increase in volume expansivity of the plasticized compound in the recessed part, whereby a sound-absorbing portion is formed as the reinforcing fibers are fluffed out and/or a void is partially created in the molded resin product. The molding method according to claim 6 is referred to as a second molding method.

In either of the first and second molding methods, a specific part of the metal mold or the recessed part thereof may be vacuumed while or after releasing the compression pressure.

Also, a heated gas may be blown onto a surface region of the molded resin product from where the compression pressure is released before or during the vacuuming operation.

Furthermore, it is preferable to maintain the temperature of the aforesaid specific part of the metal mold or the recessed part thereof 10°C to 100°C higher than the other portions of the metal mold during the compression molding operation. As an example, if the thermoplastic resin is polypropylene, it is recommended that the specific part of the metal mold or the recessed part thereof be kept within a temperature range of 100°C to 200°C, which is close to the melting point of polypropylene. This temperature range ensures that the plasticized compound is maintained in a molten or semi-molten state for a sufficient time even after the compression molding operation so that it is possible to cause a desired volume expansion of the compound by releasing the compression molding pressure. It is to be noted, however, that a mold-release material such as release paper may be required for easy removal the molded product from the metal mold.

Other materials that can be used for ensuring the ease of mold release include a resin film whereas a heat insulating material may be used for providing good thermal insulation. It is also possible to use both a resin film and a heat insulating material for ensuring good mold release and thermal insulation characteristics.

The invention of claim 12 is one to carry out the molding methods of claims 5 and 6, and is directed to a molding apparatus for molding a preform made by conglomerating a mixture of a thermoplastic resin and reinforcing fibers in a semi-molten state comprising a pair of compression molds and a slidable section slidably fitted in one of the compression molds for making it possible to move part of a molding surface of the compression mold in a mold-release direction.

The molding apparatus thus constructed may further be provided with vacuuming means for vacuuming a space formed between the slidable section and a facing surface of a molded product when the slidable section is moved. The molding apparatus may be provided with heated gas supplying means for supplying a heated gas into the space formed between the slidable section and the facing surface of the molded product when the slidable section is moved.

The invention of claim 15 is directed to a method of producing a fiber-reinforced molded resin product comprises the steps of making a preform by extruding a mixture of a thermoplastic resin and reinforcing fibers in a semi-molten state, compression-molding the preform after placing it in a metal mold having a compression area and an opening which serves as a non-compression area, wherein the compression area forms a sheetlike portion having the strength required for a structural member while the non-compression area allows restoring expansion of the reinforcing fibers near the surface of the molded resin product so that a specific surface region of the molded resin product is fluffed out and/or a void is created among the reinforcing fibers so that a sound-absorbing portion is formed in the surface region of the molded resin product. The molding method according to claim 15 is referred to as a third molding method.

The invention of claim 16 is one to carry out the molding method of claim 15, and is directed to a molding apparatus for molding a preform made by conglomerating a mixture of a thermoplastic resin and reinforcing fibers in a semi-molten state comprising a pair of compression molds, one of the compression molds having an opening in its molding surface for allowing restoring expansion of the reinforcing fibers near the surface of a compression-molded resin product.

The void mentioned above refers to an internal construction of the molded resin product characterized by the formation of small pores in fibers, or continuous holes, relatively larger hollows, or a combination thereof, created by the restoring expansion of the reinforcing fibers.

Main materials used in the molding methods of this invention are reinforcing fibers and a thermoplastic resin. Artificial fibers such as glass fibers, carbon fibers or Aramid fibers, or natural fibers made from hemp, recycled paper or straw, for instance, can be used singly or in combination as reinforcing fibers. Recommended fiber content in a molding compound is 10 to 80% by weight, and more preferably 30 to 60% by weight.

On the other hand, polyethylene, polypropylene, polystyrene, polycarbonate, polyamide, synthetic rubber or polyvinyl chloride, for instance, can be used singly or in combination as a thermoplastic resin material. Recommended resin content in a molding compound is 10 to 95% by weight, and more preferably 60 to 90% by weight. Needless to say, conventionally used fillers such as calcium carbonate, talc or glass beads, pigments such as carbon black, releasing agents, antioxidants and other additives may be added to the molding compound.

It is also possible to add metallic powder or metallic fibers made from aluminum, for example, having high thermal conductivity to the molding compound in order to achieve good heat dissipation while ensuring sound absorbing characteristics.

What is important in producing a fiber-reinforced molded resin product using the above-mentioned materials is that the individual filaments of the reinforcing fibers are interlaced in a three-dimensional structure. This structure makes it possible to effectively induce restoring expansion of the reinforcing fibers under high compression molding pressure. For preparing a molding compound containing three-dimensionally interlaced reinforcing fibers, it is recommended that the reinforcing fibers be opened by air-mixing, for instance, and blended with a resin and other materials, and then the molding compound be conglomerated into a mass of a desired form. An alternative approach is to first produce a sheetlike compound in which the reinforcing fibers are two-dimensionally oriented by using a papermaking technique, and then conglomerate the sheetlike compound by folding it or rolling it up into cylindrical form. It is possible to obtain three-dimensional interlacing of the reinforcing fibers by this approach as well because they are randomly oriented in a compression molding operation.

The molding methods of this invention can be applied to the production of an intermediate product, or a preform, which is made by preshaping a mixture of reinforcing fibers and thermoplastic resin powder or fibers and then melting and cooling down its surface layer, as well as to the production of a finished product which is obtained by compression-molding the preformed intermediate product into a desired final shape.

In the fiber-reinforced molded resin product of claims 1 to 4, a sound-absorbing portion is partially formed in the molded resin product by fluffing out reinforcing fibers in a specific surface region of the molded resin product and/or creating a void in a specific surface region of the molded resin product.

In the molding method of claim 5, a mixture of a thermoplastic resin and reinforcing fibers is plasticized, and a resultant plasticized compound is fed into a metal mold to produce an intermediate product. The intermediate product is placed in a metal mold and is compressingly molded. During the compression molding operation, the compression pressure on a desired surface region of the molded resin product is released by moving the mold in a receding direction so as to fluff out reinforcing fibers and/or create a void, thereby providing a sound-absorbing portion.

In the molding method of claim 6, a part of the plasticized compound flows into the recessed part during the compression molding operation and the amount of the plasticized compound in the recessed part rises, resulting in an increase in volume expansivity of the plasticized compound in the recessed part. Consequently, a fiber-reinforced molded resin product having a high sound-absorbing performance can be obtained.

In the molding method of claim 15, similarly to claim 5, a preform is produced. The preform is placed in a metal mold having a compression area and an opening which serves as a non-compression area. The compression area forms a sheetlike portion having the strength required for a structural member while the non-compression area allows restoring expansion of the reinforcing fibers near the surface of the molded resin product so that a specific surface region of the molded resin product is fluffed out or a void is created among the reinforcing fibers, whereby a sound-absorbing portion is formed in the surface region of the molded resin product.

The fiber-reinforced molded resin product of the invention has a state that reinforcing fibers on a part of the surface of the product are fluffed out, a state that reinforcing fibers on the surface on one side are partially fluffed out and a no- fluffed-out portion or solid portion on the surface on the other side, a state that a void is created in a specific surface region, or a state that fine spaces are created in each surface formed by melting and cooling down the thermoplastic resin containing reinforcing fibers. Accordingly, the molded product including the sound-absorbing portion can be produced from a single molding material.

The molding methods of the invention make it possible to easily produce fiber-reinforced molded resin products from substantially a single molding material without requiring assembly of different materials. Featuring good sound-absorbing performance, recyclability and low production costs, these products are suited for use as under shields of automobiles and other sound absorbing parts, for example.

According to the first molding method, reinforcing fibers can be fluffed out or create a void among the reinforcing fibers in a specific surface region of a molded product in a single press operation.

According to the second molding method, an additional amount of plasticized compound can be charged only to such a portion where volume expansion should occur. It is therefore possible to supply the reinforcing fibers in a convenient way for causing volume expansion so that a fiber-reinforced molded resin product having high sound-absorbing performance is obtained.

According to the third molding method, there is readily provided a larger space than the expected volume expansion in the metal mold so that a specific surface region of the molded resin product can be easily fluffed out.

### BRIEF DESCRIPTION OF THE DRAWINGS

FIG. 1 is a schematic diagram illustrating a principle of a molding method of the invention;
FIG. 2 is a schematic diagram illustrating a principle of another molding methods of to the invention;
FIG. 3 is a diagram illustrating the configuration of molding equipment employed in a first molding method of the invention;
FIG. 4 is a fragmentary enlarged cross-sectional view of metal molds shown in FIG. 3;
FIG. 5 is a diagram illustrating the configuration of molding equipment employed in a second molding method of the invention;
FIG. 6 is a graphical presentation of sound absorbing properties of molded products made by the second molding method;
FIG. 7 is a graphical presentation of sound absorbing properties of a molded product made by a conventional molding method;
FIG. 8 is a graphical presentation of sound absorbing properties of a conventional sound absorbing material; and
FIG. 9 is a diagram illustrating the configuration of molding equipment employed in a third molding method of the invention.

### BEST MODE FOR CARRYING OUT THE INVENTION

The invention is now described in detail with reference to its preferred embodiments which are illustrated in the appended drawings.

This invention has been made taking into account the fact that thermoplastic composite resin materials reinforced with glass fibers or other kinds of fibers have a tendency to increase in volume when they are plasticized prior to a molding process.

Various kinds of thermoplastic composite resin materials are available for specific applications. A molding compound used in this invention is prepared by air-mixing reinforcing fibers, thermoplastic resin powder or resin fibers and other additives and shaping a mixture thereof into a desired form such as a cylinder.

The molding compound thus prepared is subjected to plasticizing and molding processes. During these processes the volume of the plasticized compound increases due to a reduction in the viscosity of the resin and restoring expansion, or a spring back effect, of the fibers. The surface of the plasticized compound is raised, or fluffed out when a compressive force acting on fibers, which have been entangled with one another, is removed. The invention is basically intended to provide means or methods for creating and leaving an expanded portion at a desired part of a molded product or for accelerating the spring back effect or raising effect by eliminating the molding pressure while the temperature of a plasticized compound is sufficiently high in a compression molding operation.

Basic principles of molding methods according to the invention are explained below.

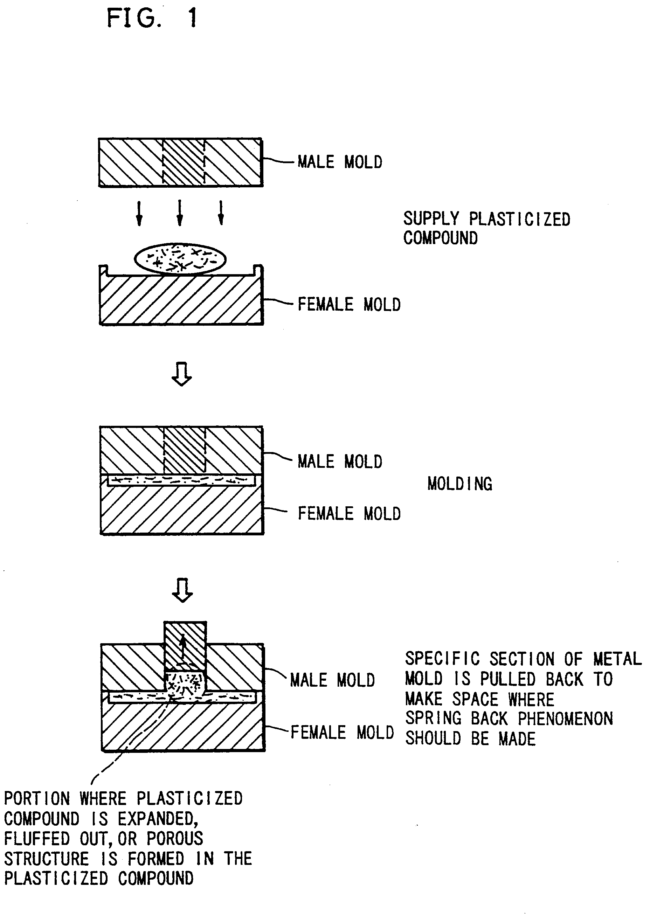

FIG. 1 is a diagram illustrating a first molding method of the invention. In this method, in order to ensure good moldability when creating and leaving an expanded portion, a molding compound is generally shaped in the beginning of a molding process and, then, a specific section of a metal mold, of which surface has initially been flush with a surrounding surface, is pulled back to make a space inside the metal mold for accelerating the spring back effect or raising effect.

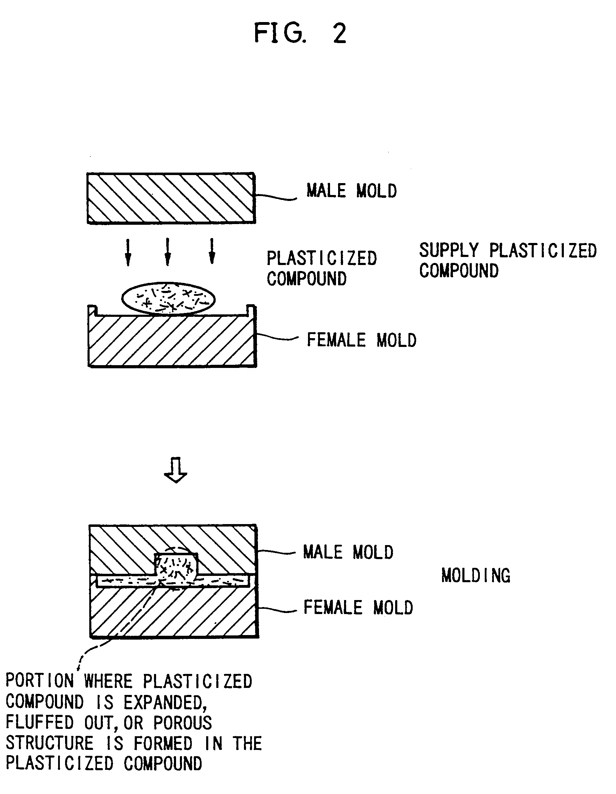

FIG. 2 is a schematic diagram illustrating second and third molding methods of the invention. Alternatively, in the other method for creating and leaving an expanded portion, a metal mold may be constructed so that it provides such an internal space that would scarcely be sufficient to accommodate an expected volume expansion or such a space that is larger than the expected volume expansion. If the space inside the metal mold is smaller than the actual volume expansion, an expanded part of a molding compound would be more or less shaped into a generally flat surface. Contrary to this, if the space inside the metal mold is larger than the actual volume expansion, the surface of the expanded part would be raised, or fluffed out. The former method is referred to as the second molding method, in which a molding compound is compression-molded at first by using the smaller space than the expected volume expansion and, then, the compressive force is removed to cause a further expansion, whereas the latter method is referred to as the third molding method, in which the molding compound is molded by using the larger space than the internal space of the metal mold.

Male and female metal molds need not necessarily be set to the same temperature. It is rather recommended that a portion of a metal mold or a surface region thereof where the spring back or raising phenomenon should take place be set to a higher temperature than other parts of the metal molds. More particularly, it is recommended that the metal mold surface be set to a temperature between 10°C and 100°C, and more preferably, between 100°C and 200°C, which is close to the melting point of the resin. In this manner, it is possible to cause an intended volume expansion of the molding compound without cooling it regardless of the length of pressing time. In practical applications, it is desired to sufficiently cool the surface of one metal mold to ensure flatness and smoothness of one side of a molded product and to heat the surface of the other metal mold to cause volume expansion for providing sound absorbing performance to the other side of the molded product.

For accelerating the aforementioned spring back phenomenon, it is recommended to use a suction force, heat the molding compound, blow a heated gas into a cavity between the metal molds, use a blowing agent, or mechanically pull up the surface of the molding compound, for example. A blowing agent usable for this purpose would be such a substance that dissolves by itself and produces a spongy structure. If such a blowing agent is added in the air-mixing process, the blowing agent will accelerate volume expansion during plasticizing operation. A molded product having a swollen part is obtained by forming the compound containing the blowing agent by the aforementioned first, second or third molding method.

It is to be noted that the expanding or raising operation of the invention need not necessarily be performed in metal molds. One alternative is to cause volume expansion of or fluff up the surface of a desired part of the molded product after molding operation by use of a suction device, for instance.

Specific arrangements for practical application of the aforementioned molding methods are now described.

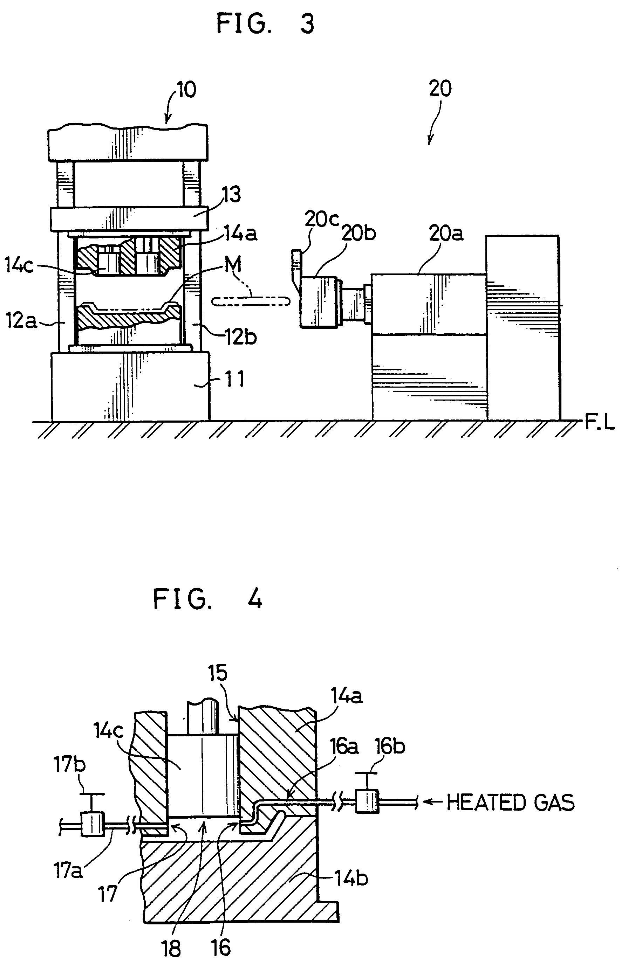

FIG. 3 is a diagram illustrating the configuration of molding equipment employed in the first molding method of the invention.

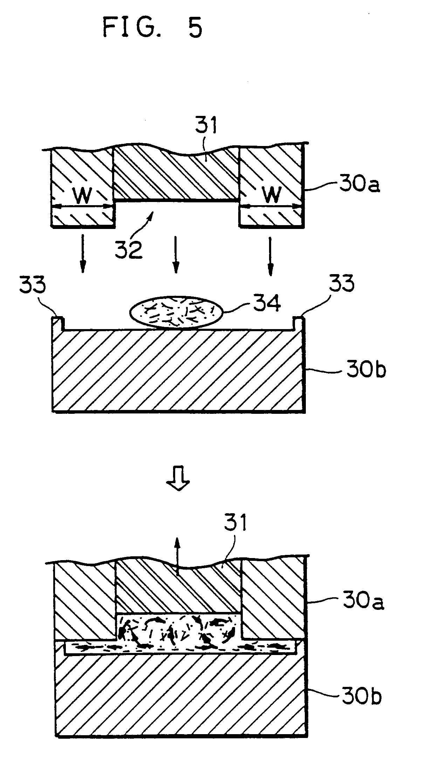

In FIG. 3, designated by the numeral 10 is a compression molding machine, which comprises a mounting base 11, guide shafts 12a and 12b mounted on the mounting base 11 in an upright position, a press ram 13 which can descend and ascend along the guide shafts 12a and 12b, a male mold 14a fixed to the bottom of the press ram 13, and a female mold 14b secured on the mounting base 11 in such a way that the male mold 14a and female mold 14b are directed to face each other. As can be seen from FIG. 4, in which the male and female metal molds 14a and 14b are in close contact with each other, a vertically slidable cylindrical member 14c is fitted inside the male mold 14a. This cylindrical member 14c can be flush with the molding surface of the male mold 14a at the beginning of a compression molding operation and lifted upward to create a convex-shaped space in the male mold 14a. The up/down stroke of the cylindrical member 14c is made adjustable in accordance with the shape of each molded product.

There are provided a gas input hole 16 and a suction hole 17 at a lower position of a through hole 15 in which the cylindrical member 14c is fitted. Located on opposite sides of the inner wall of the through hole 15, the gas input hole 16 and suction hole 17 serve to introduce a high-temperature inert gas is introduced into the space 18 which is created when the cylindrical member 14c is lifted upward (not during the compression molding operation) and to discharge the inert gas, respectively. With this arrangement, it becomes possible to heat such a surface region of the molding compound that faces the bottom surface of the cylindrical member 14c. Designated by the numeral 16a is a gas feeding passage, designated by the numeral 16b is a valve for controlling the gas supply, designated by the numeral 17a is a gas exhaust passage, and designated by the numeral 17b is a valve for controlling the gas discharge. The above-mentioned passages for introducing and discharging a high-temperature inert gas are heated gas feeding means.

There may be provided a directional control valve in the gas exhaust passage 17a, one used for exhausting the gas and the other connected to a pressure-reducing device. This configuration makes it possible to pull up the surface region of the molding compound by a sucking action for accelerating the expanding or raising effect.

In FIG. 3, a plasticating melt extruder 20 causes molding compound to melt by heating and to be extruded between the male mold 14a and female mold 14b in a specified shape, for example, a sheetlike form. Specifically, as a plunger incorporated in a casing 20a pushes the compound, it is extruded in a beltlike form through a die 20b. As the beltlike compound passes by a cutter 20c, it is cut into specified lengths to produce sheets of the molding compound M (shown by an alternate long and two short dashed line in FIG. 3).

The molding method applied to the molding equipment having the aforementioned configuration is now described in further detail.

### FIRST EMBODIMENT

40 parts by weight of glass fibers, measuring 13 µm in diameter and 13 mm long, and 60 parts by weight of readily crushed polypropylene powder were mixed by air, and a cylindrical intermediate product (a molding compound), or a preform, was prepared. This intermediate product was made by melting and solidifying only its thin surface layer (the product was in a semi-molten state). Approximately 300 g of the intermediate product was melted and extruded by a dedicated plasticator and supplied to the molding equipment for compression molding operation. In this case, a molding surface of an upper compression mold was set to a temperature of 140°C while a molding surface of a lower compression mold was set to 70°C. To prevent adhesion between the molding surface of the upper compression mold and the molten molding compound, a Teflon sheet containing glass fibers was placed on top of the molding compound as a film.

The molding compound was compression molded under conditions of a molding pressure of 100 kg/cm² and a cooling time of 13 seconds. Immediately after removing a molded product from the molds, its top surface was sucked. As a result, the sucked portion of the molded product exhibited a three to five times volume expansion compared to the portions which had not been sucked, and a thin outer skin of a resin material, or a resin containing glass fibers, had been partially created on the sucked surface region. It has also been found that numerous small pores were created inside the molded product due to the spring back effect of the glass fibers. A test piece was taken from the expanded part of the molded product and its sound absorbing properties were measured by using a sound absorption and acoustic impedance measuring system "ACIMS" manufactured by Kobe Steel, Ltd., Japan. According to the measurement results, the sound absorbing coefficient of the test piece at 1500 Hz was 0.5, which represents extremely high sound absorbing performance.

It is to be pointed out that the top surface of the molded product can also be sucked by vacuuming the space 18 by using the earlier-mentioned pressure-reducing device. This approach serves to fluff out the surface of the molded product more precisely.

### COMPARATIVE EXAMPLE 1

A molding compound to be compression-molded was prepared in exactly the same manner as the first embodiment. The resultant molding compound was molded by using the same compression molding machine and metal molds. A compression molding operation was performed under conditions of a molding pressure of 100 kg/cm² and a cooling time of 30 seconds with the molding surfaces of both the upper and lower metal molds set to 50°C. A molded product obtained from this operation was a plate having a smooth surface without any fluffing, and almost no signs of volume expansion were observed. A test piece was taken from this molded product and its sound absorbing properties were measured using the same measuring method as used for the test piece of the first embodiment. The result was a sound absorbing coefficient of about 0.15 at 1500 Hz. It has been found from this test result that fiber-reinforced molded resin products produced by the conventional compression molding method provide poor sound absorbing performance and, therefore, they are not good enough to be used as sound-absorbent materials.

Next, the second molding method of the invention is now described.

In the second molding method, a metal mold is in advance provided with an extra space to charge a larger amount of molding compound to a location where volume expansion should be made than the other portions. FIG. 5 shows a general arrangement of metal molds used in the second molding method. In other words, in order to charge a larger amount of molding compound to a location where volume expansion should be made than the other portions, an extra space is in advance formed in the metal molds. As a specific method for forming such extra space, a vertical movable insert 31 is fitted in a male mold 30a with the bottom of the insert 31 located higher than the lower surface of the male mold 30a by a specified amount to create a recess 32. Arranged face to face with the male mold 30a is a female mold 30b, which has an outer flange 33 projecting upward from its upper periphery. In FIG. 5, designated by the numeral 34 is a plasticized compound to be filled in between the male mold and female mold. Such a mold construction is extremely beneficial in producing high-quality moldings. Fiber-reinforced molded resin products of this invention are characterized in that their surface regions are expanded, causing an increase in volume. It is required in this invention to achieve two actions conflicting with each other in one metal mold, that is, to cool an outer skin area of a molded product and maintain its expanded portion at a higher temperature (or suppress the cooling of the expanded portion) at the same time. If the thickness of the molding compound during compression molding is small throughout its whole body, it is difficult to properly control its partial cooling and maintenance of high temperature. It is not desirable either to evenly thicken the molded product because a larger thickness would result in an increase in the weight of the product and costs of materials. Simultaneous partial cooling and maintenance of high temperature is achieved by the aforementioned mold construction which makes it possible to charge an additional amount of molding compound only to such a location where volume expansion is to be made. This mold construction also has such advantages as described below. In an ordinary mold construction, if a molding resin material flows during a molding operation, fibers contained in the molding material are likely to be aligned, or oriented uniformly, and this would make it difficult to cause sufficient volume expansion. In the mold construction of the invention having the extra space, part of the molding resin material flowing into the extra space causes a turbulent flow so that fibers contained in the plasticized compound are released from uniform orientation and randomly aligned. As a result, the fibers adopt an arrangement favorable for causing volume expansion. The plasticized compound flowing into the extra space acts as a buffer. It is preferable that the male mold 30a and female mold 30b be provided with high-temperature gas feeding means and pressure-reducing means as was the case with the first embodiment. When the flow distance of the molding compound is long, a larger shearing force will develop within the body of the molding compound, and the fibers contained in it become likely to be biaxially oriented. To prevent this problem, there may be provided more than one extra space in a molding surface where a flow of the molding compound occurs. This construction would provide a more preferable orientation-reducing effect.

### SECOND EMBODIMENT

40 parts by weight of glass fibers, measuring 13 µm in diameter and 13 mm long, and 60 parts by weight of readily crushed polypropylene powder having a melt flow rate of 45 g/min. were mixed by air, and a cylindrical intermediate product was prepared in the same manner as the first embodiment. This intermediate product was made by melting and solidifying only its thin surface layer and then cooling it down to a semi-molten state.

Approximately 300 g of the intermediate product was melted and compression-molded by using a dedicated plasticator shown in FIG. 5. The metal molds have external dimensions corresponding to A4-size and the insert 31 is made vertically movable in the male mold 30a inside its 2-cm-wide outermost parts (indicated by W in FIG. 5). In this molding operation, both the male mold 30a and female mold 30b were set to a temperature of 100°C and the molding pressure was set to approximately 200 kg/cm².

After a preset compression pressure was reached, the metal molds were held in the compression state for a specified period of time. Then, the insert 31 was lifted upward by a specified distance and the metal molds were held in this condition for about 60 seconds. Obtained from this operation was a molded product of which bottom surface (which had been in contact with the female mold 30b) was a smooth skin sufficiently cooled by the female mold while its top surface (which had been in contact with the male mold 30a), excluding 2-cm-wide outermost parts, showed volume expansion caused by an elastic restoring force of the reinforcing fibers. Four molded products, measuring 10 mm, 16 mm, 19 mm and 27 mm thick, were produced using the aforementioned method.

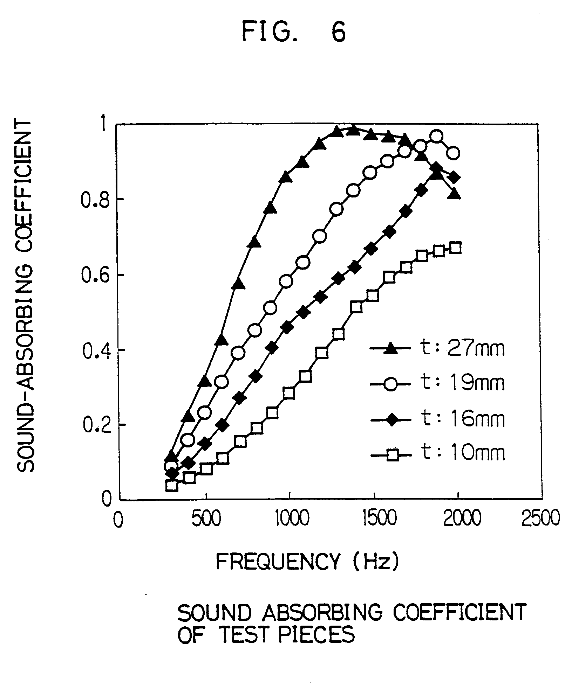

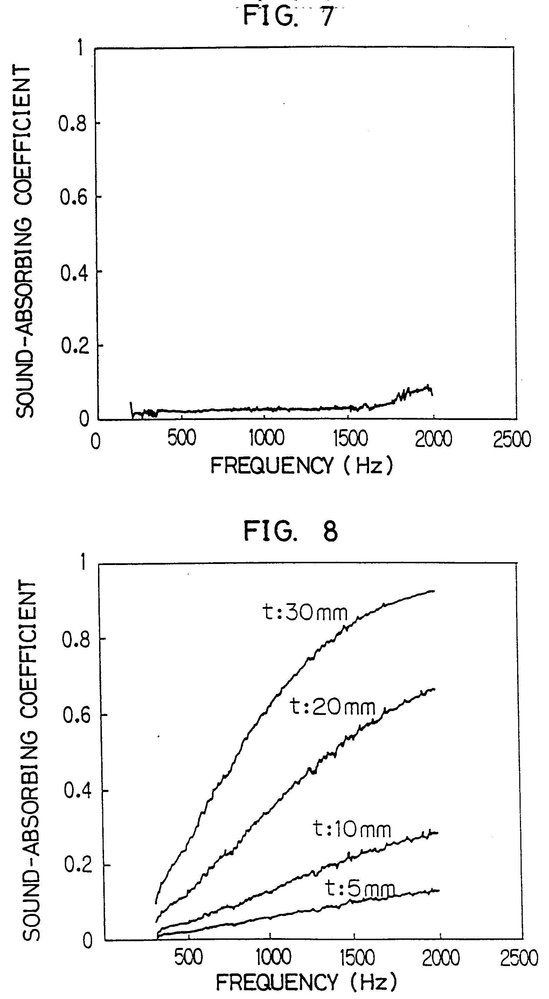

Test pieces, each measuring 88 mm in diameter, were taken from expanded parts of the individual molded products and, after adjusting the aperture ratio of each test piece to 10%, their sound absorbing properties were measured by using the sound absorption and acoustic impedance measuring system ACIMS. Shown in FIG. 6 are their measurement results. Shown in FIG. 7 are sound absorbing properties of a comparative example, which was made by molding exactly the same materials as above to a thickness of 5 mm without causing volume expansion in accordance with a conventional compression molding method. In addition, FIG. 8 shows sound absorbing properties of a glass-wool mat which is widely used as a sound absorbing material. It has been found from a comparison of these measurement results that the molded products of the invention provide significantly high sound absorbing performance compared to the conventional compression-molded product which was not expanded and the glass-wool mat of the same thickness.

### THIRD TO SEVENTH EMBODIMENTS

Next, a molding compound prepared in exactly the same manner as the first embodiment was molded while thermally insulating an expanded portion by using the metal molds shown in FIG. 5. More particularly, various kinds of thermal insulation materials such as paper and a polycarbonate sheet having different thicknesses were attached to such a surface region of a metal mold that comes into contact with an expanded portion of a molded product, and their insulating effects were examined, especially to determine whether the use of a thermal insulation material could promote volume expansion of a plasticized compound. In these evaluation tests, the insert 31 fitted in the male mold 30a was set to a temperature of 100°C and the temperature of the male mold and female mold was adjusted within a temperature range of 90°C and 100°C. Approximately 4 to 20 seconds after a preset compression pressure was reached, the insert 31 was lifted upward by a specified distance and the insert was held in this lifted state for about 60 seconds.

Table 1 shows specific molding conditions, including various kinds of thermal insulation materials and their thicknesses. In Table 1, "molding time" refers to a time period which begins when a specified molding pressure is reached and ends when the insert is lifted upward, "retention time" refers to a time period which begins when the insert is lifted upward and ends when the metal molds are put into a mold parting process, and "thickness before expansion" is an estimate calculated based on the amount of plasticized compound to be charged and molding surface areas.

**TABLE 1**

| | 3rd embodiment | 4th embodiment | 5th embodiment | 6th embodiment | 7th embodiment |
|---|---|---|---|---|---|
| Insulating material | Polycarbonate sheet | Polycarbonate sheet | Polycarbonate sheet | Paper | Paper |
| Thickness of insulating material (mm) | 0.8 | 4 | 4 | 0.07 | 0.07×5 |
| Molding time (sec.) | 5 | 5 | 20 | 4 | 4 |
| Retention time (sec.) | 60 | 60 | 60 | 60 | 60 |
| Thickness before expansion (mm) | Approx. 3 | Approx. 3 | Approx. 3 | Approx. 3 | Approx. 3 |
| Thickness after expansion (mm) | 15-18 | 22-25 | 14-17 | 16-18 | 18-22 |

Next, the third molding method of the invention is described.

According to the third molding method, a mixture of thermoplastic resin powder and reinforcing fibers is heated to a semi-molten state and extruded as an intermediate product shaped into a specified form, such as a sheet. The intermediate product is placed between metal molds having a compression area and non-compression areas, or openings, for performing a compression molding operation. The compression area forms a sheetlike portion having the strength required for a structural member. On the other hand, the openings allow restoring expansion of the fibers near the surface of a molded product so that specific surface regions of the molded product are fluffed out or small pores are created due to the expansion of the fibers. As the result of this operation, the obtained molded product has specific surface regions which serve as sound-absorbing portions.

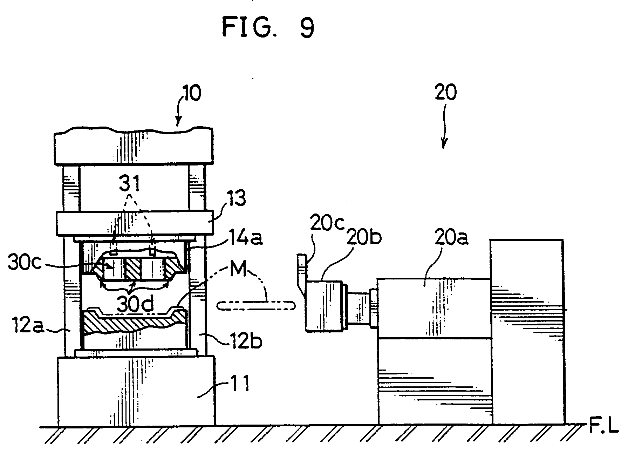

FIG. 9 is a diagram illustrating the configuration of molding equipment employed in the third molding method of the invention. In FIG. 9, elements equivalent to those shown in FIG. 3 are designated by the same reference numerals and a description of such elements is omitted here.

A major difference between the molding equipment of FIG. 9 and that of FIG. 3 lies in the construction of their metal molds. Specifically, of a male mold 30a and a female mold 30b shown in FIG. 9, the male mold 30a has a plurality of cylindrical openings 30c which are formed at specific regions of its molding surface to serve as non-compression areas, while the remaining part thereof are compression areas which serve as an actual molding surfaces 30d.

With this configuration, a molding compound is left in an uncompressed state at the locations of the openings 30c even after compression molding, and reinforcing fibers embedded in the uncompressed surface regions can freely expand due to their elastic restoring force. Accordingly, it is possible to create a partially raised, or fluffed, surface or internal small pores in a single press operation. Designated by the numeral 31 in FIG. 9 are nozzles for selectively supplying cold air or hot air. If cold air is supplied during compression molding, those portions where the spring back phenomenon has occurred are cooled down and hardened without being compressed. Hot air is blown onto such an intermediate product that is less likely to exhibit the spring back phenomenon in order to accelerate its volume expansion.

## Claims

1. A fiber-reinforced molded resin product produced by plasticizing and compression-molding a mixture of a thermoplastic resin and reinforcing fibers, said fiber-reinforced molded resin product comprising a sound-absorbing portion formed by causing restoring expansion of the compressed reinforcing fibers in a specific surface region of said molded resin product to fluff out the reinforcing fibers in that surface region.

2. A fiber-reinforced molded resin product according to claim 1, comprising a partially fluffed surface on one side and an unfluffed solid skin on the other side.

3. A fiber-reinforced molded resin product according to claim 1 or 2, wherein a void is partially created in said molded resin product.

4. A fiber-reinforced molded resin product produced by plasticizing and compression-molding a mixture of a thermoplastic resin and reinforcing fibers, said fiber-reinforced molded resin product comprising a solid skin formed on each surface by once melting and then solidifying the thermoplastic resin containing the reinforcing fibers and a sound-absorbing portion formed by causing restoring expansion of the compressed reinforcing fibers in a specific surface region of said molded resin product to partially create a void in said molded resin product.

5. A method of producing a fiber-reinforced molded resin product comprising the steps of:
plasticizing a mixture of a thermoplastic resin and reinforcing fibers;
feeding a resultant plasticized compound into a metal mold; and
compression-molding the plasticized compound in said metal mold;
wherein the compression pressure in a desired surface region of said molded resin product is released during the compression molding operation so that a sound-absorbing portion is formed in that surface region as the reinforcing fibers are fluffed out and/or a void is partially created in said molded resin product due to restoring expansion of the compressed reinforcing fibers.

6. A method of producing a fiber-reinforced molded resin product comprising the steps of:
plasticizing a mixture of a thermoplastic resin and reinforcing fibers;
feeding a resultant plasticized compound into a metal mold having a recessed part at a location corresponding to a portion of the plasticized compound where restoring expansion of the compressed reinforcing fibers is to be caused; and
compression-molding the plasticized compound in said metal mold;
wherein part of the plasticized compound flows into said recessed part during the compression molding operation, resulting in an increase in volume expansivity of the plasticized compound in said recessed part so that a sound-absorbing portion is formed as the reinforcing fibers are fluffed out and/or a void is partially created in said molded resin product due to restoring expansion of the compressed reinforcing fibers.

7. A method of producing a fiber-reinforced molded resin product according to claim 5 or 6, wherein a specific part of the metal mold or said recessed part is vacuumed while or after releasing the compression pressure.

8. A method of producing a fiber-reinforced molded resin product according to claim 7, wherein a heated gas is blown onto a surface region of said molded resin product from where the compression pressure is released before or during the vacuuming operation.

9. A method of producing a fiber-reinforced molded resin product according to one of claims 5 to 8, wherein said specific part of the metal mold or said recessed part is maintained at a higher temperature than the other portions of the metal mold during the compression molding operation.

10. A method of producing a fiber-reinforced molded resin product according to one of claims 5 to 9, wherein the compression molding operation is performed with a resin film, release paper or a thermal insulator placed between the plasticized compound and the metal mold.

11. A method of producing a fiber-reinforced molded resin product according to one of claims 5 to 10, wherein said metal mold has a needlelike or rodlike protrusion in a region of a molding surface where the compression pressure is released for creating an opening in the surface of said molded resin product.

12. A molding machine for molding a preform made by conglomerating a mixture of a thermoplastic resin and reinforcing fibers in a semi-molten state, said molding machine comprising a pair of compression molds and a slidable section slidably fitted in one of said compression molds to enable movement of a part of a molding surface of said compression mold in a mold-release direction.

13. A molding machine according to claim 12, further comprising a pressure-reducing device for vacuuming a space formed between said slidable section and a facing surface of a molded product when said slidable section is moved.

14. A molding machine according to claim 12 or 13, further comprising a heated gas feeder for supplying a heated gas into a space formed between said slidable section and a facing surface of a molded product when said slidable section is moved.

15. A method of producing a fiber-reinforced molded resin product comprising the steps of:
making a preform by extruding a mixture of a thermoplastic resin and reinforcing fibers in a semi-molten state;
compression-molding said preform after placing it in a metal mold having a compression area and an opening which serves as a non-compression area;
wherein said compression area forms a sheetlike portion having the strength required for a structural member while said non-compression area allows restoring expansion of the reinforcing fibers near the surface of said molded resin product so that a specific surface region of said molded resin product is fluffed out or a void is created among the reinforcing fibers to form a sound-absorbing portion in said surface region of said molded resin product.

16. A molding machine for molding a preform made by conglomerating a mixture of a thermoplastic resin and reinforcing fibers in a semi-molten state, said molding machine comprising a pair of compression molds, one of said compression molds having an opening in its molding surface for allowing restoring expansion of the reinforcing fibers near the surface of a compression-molded resin product.
